(19) Europäisches Patentamt

European Patent Office

Office européen des brevets

(11) **EP 1 365 522 A2**

(12) **EUROPEAN PATENT APPLICATION**

(43) Date of publication:
    **26.11.2003 Bulletin 2003/48**

(51) Int Cl.⁷: **H04B 7/08**

(21) Application number: **03250930.9**

(22) Date of filing: **14.02.2003**

(84) Designated Contracting States:
    **AT BE BG CH CY CZ DE DK EE ES FI FR GB GR
    HU IE IT LI LU MC NL PT SE SI SK TR**
    Designated Extension States:
    **AL LT LV MK RO**

(30) Priority: **30.03.2002 KR 2002017605**

(71) Applicant: **SAMSUNG ELECTRONICS CO., LTD.**
    **Suwon-City, Kyungki-do (KR)**

(72) Inventor: **Hwang, Chan-soo,**
    **303-1704 Geumhwa Maeul Jugong Apt**
    **Yonging-city, Kyungki-do (KR)**

(74) Representative: **Greene, Simon Kenneth**
    **Elkington and Fife,**
    **Prospect House,**
    **8 Pembroke Road**
    **Sevenoaks, Kent TN13 1XR (GB)**

(54) **Apparatus and method for up-link data communication**

(57)    An apparatus and method for up-link data communication is provided. The apparatus for up-link data communication which obtains user information from wireless signals transmitted from $b$ mobile stations (where $b$ is a positive integer greater than 1) among a mobile stations (10, 12, 14, 16) (where a is a positive integer greater than 2), each mobile station having one antenna (20, 22, 24, 26) includes $c$ antennas (62, 64, 66, 68) (where $c \geq a$) which receives the wireless signal, a first multi-channel receiving unit (80) which extracts received signals from the wireless signal received by the $c$ antennas, a first channel value estimating unit (82) which estimates impulse responses of channels that are formed between the mobile stations and the antennas, from the received signals and outputs the estimated impulse responses as channel values, and a first information estimating unit (84) which cancels interference between the mobile stations, from the received signal and the channel values, and estimates the user information from the result of cancellation. The random access period can be reduced such that a time required for transmitting and receiving another data is relatively increased and the capacity of the channel as the entire throughput, is increased to the number of antennas of a base station even if the number of antennas of each of the mobile stations is one.

FIG. 2

EP 1 365 522 A2

**Description**

The present invention relates to wireless communication, and more particularly, to an apparatus and method for up-link data communication, which is data communication from mobile stations to a base station in wireless communication.

In general, a first conventional method for up-link data communication is disclosed in U.S. Patent No. 5,345,599 entitled "Increasing Capacity in Wireless Broadcast System using Distributed Transmission Direction Reception (DTDR)", issued on September 6, 1994. In the first conventional method for up-link data communication, a multiple antenna is simultaneously required in a base station and a subscriber station that can be mobile station. However, since the size of a mobile subscriber station is limited, the first conventional method for up-link data communication cannot provide a multiple antenna for the subscriber station.

A second conventional method for up-link data communication is disclosed in U.S. Patent No. 5,815,116 entitled "Personal Beam Cellular Communication System", issued on September 29, 1998. In the second conventional method for up-link data communication, a wireless signal received from a subscriber is discriminated by increasing the number of sectoring. However, sectoring having only a small beam width should be used in the second conventional method for up-link data communication. Thus, the second conventional method for up-link data communication cannot be used when scattering of a channel is severe.

According to one aspect of the present invention, there is provided an apparatus for up-link data communication which obtains user information from a wireless signal transmitted from $b$ mobile stations (where $b$ is a positive integer greater than 1) among $a$ mobile stations (where $a$ is a positive integer greater than 2), each mobile station having one antenna. The apparatus includes $c$ antennas (where $c \geq a$) which receives the wireless signal, a first multi-channel receiving unit which extracts received signals from the wireless signal received by the $c$ antennas, a first channel value estimating unit which estimates impulse responses of channels that are formed between the mobile stations and the antennas, from the received signals and outputs the estimated impulse responses as channel values, and a first information estimating unit which cancels interference between the mobile stations, from the received signal and the channel values, and estimates the user information from the result of cancellation.

This therefore is capable of reducing a random access period and increasing the capacity of a channel by the number of antennas which a base station has, in data communication from a mobile station to the base station.

According to another aspect of the present invention, there is provided a method for up-link data communication performed by the apparatus for up-link data communication. The method includes receiving the wireless signal and extracting the received signal from the received wireless signal, estimating the impulse responses using the received signals and determining the estimated impulse responses as the channel values, and canceling the interference using the received signal and the channel values and estimating the user information using the result of cancellation.

This method is capable of reducing a random access period and increasing the capacity of a channel by the number of antennas which a base station has, in data communication from a mobile station to the base station.

According to another aspect of the present invention, there is provided an apparatus for up-link data communication which obtains user information from a wireless signal transmitted from $b$ mobile stations (where $b$ is a positive integer greater than 1) among $a$ mobile stations (where $a$ is a positive integer greater than 2), each mobile station having one antenna. The apparatus includes c antennas (where $c \geq a$) which receives the wireless signal, a second multi-channel receiving unit which extracts received signals from the wireless signal received by the $c$ antennas, a second channel value estimating unit which estimates impulse responses of channels that are formed between the mobile stations and the antennas, from the received signals and outputs the estimated impulse responses as channel values, a second information estimating unit which is enabled in response to a first control signal, cancels interference between the mobile stations from the received signals and the channel values, and estimates the user information from the result of cancellation, a third information estimating unit which is enabled in response to a second control signal, combines the received signals using the channel values, and estimates the user information from the result of combination, and a first enabling unit which generates the first and second control signals at the interval of a predetermined amount of time.

According to still another aspect of the present invention, there is provided an apparatus for up-link data communication which obtains user information from a wireless signal transmitted from $b$ mobile stations (where $b$ is a positive integer greater than 1) among $a$ mobile stations (where $a$ is a positive integer greater than 2), each mobile station having one antenna. The apparatus includes a first up-link data communication unit which is enabled in response to a third control signal, estimates channel values from received signals extracted from the received wireless signal, cancels interference between the mobile stations from the estimated channel values and the received signals, and estimates the user information from the result of cancellation, a second up-link data communication unit which is enabled in response to a fourth control signal, estimates channel values from received signals extracted from the received wireless signal, combines the received signals using the estimated channel values, and estimates the user information from the result of combination, and a second enabling unit which generates the third and fourth control signals at the interval of a predetermined amount of time. Each of the first and second up-link data communication units has $c$ antennas (where $c \geq a$) which receives the wireless signal, and the channel values correspond to impulse responses of channels that are formed between the mobile stations and the antennas.

According to another aspect of the present invention, there is provided a method for up-link data communication performed by the apparatus for up-link data communication. The method includes receiving the wireless signal and extracting the received signals from the received wireless signal, estimating the impulse responses using the received signals and determining the estimated impulse responses as the channel values, determining whether a communication time belongs to a random access period, canceling the interference using the received signals and the channel values and estimating the user information using the result of cancellation if it is determined that the communication time belongs to the random access period, and combining the received signals using the channel values and estimating the user information using the result of combination if it is determined that the communication time does not belong to the random access period.

The above features and advantages of the present invention will become more apparent by describing in detail preferred embodiments thereof with reference to the attached drawings in which:

FIG. 1 illustrates an external environment of an apparatus for up-link data communication according to the present invention;
FIG. 2 is a block diagram illustrating a preferred embodiment of the apparatus for up-link data communication shown in FIG. 1, according to the present invention;
FIG. 3 is a flow chart illustrating an embodiment of a method for up-link data communication according to the present invention, implemented with the apparatus for up-link data communication shown in FIG. 2;
FIG. 4 is a flow chart illustrating another embodiment of the method for up-link data communication according to the present invention;
FIG. 5 is a block diagram illustrating another preferred embodiment of the apparatus for up-link data communication shown in FIG. 1 according to the present invention, which implements the method for up-link data communication shown in FIG. 4;
FIG. 6 is a block diagram illustrating still another preferred embodiment of the apparatus for up-link data communication shown in FIG. 1 according to the present invention, which implements the method for up-link data communication shown in FIG. 4;
FIG. 7 illustrates the concept of random access in a conventional slotted ALOHA manner;
FIG. 8 illustrates the concept of random access in a slotted ALOHA manner according to the present invention;
FIG. 9 is a conceptual diagram for modeling a channel; and
FIG. 10 is a graph for comparing the performance of the present invention with that of prior art.

Hereinafter, both the structure and the operation of preferred embodiments of an apparatus for up-link data communication and a method for up-link data communication of each embodiment, according to the present invention, will be described in detail with reference to the accompanying drawings.

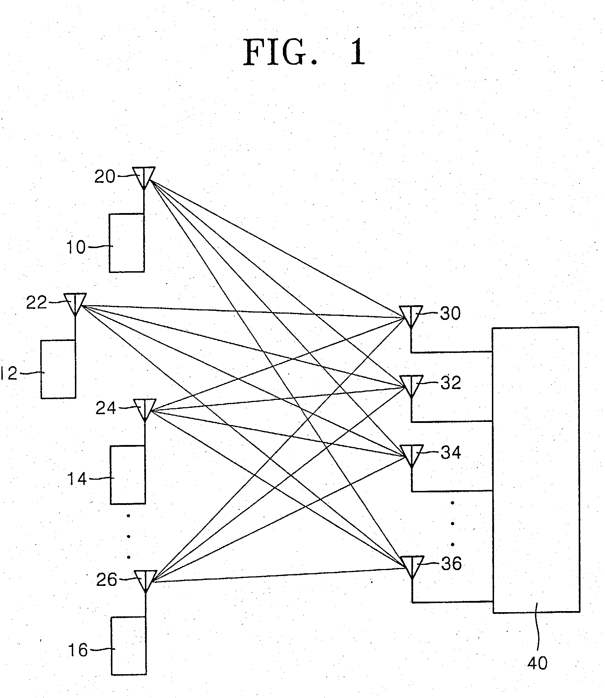

FIG. 1 illustrates an external environment of an apparatus for up-link data communication according to the present invention. Referring to FIG. 1, the external environment of the apparatus for up-link data communication according to the present invention includes a mobile stations 10, 12, 14, ..., and 16 (where a is a positive integer greater than 2) and a base station 40. Here, the base station 40 corresponds to the apparatus for up-link data communication according to the present invention.

The mobile station 10, 12, 14, ..., or 16 shown in FIG. 1 has only one antenna 20, 22, 24, ...., or 26, and $b$ mobile stations (where $b$ is a positive integer greater than 1) among the a mobile stations 10, 12, 14, ..., and 16 transmit a wireless signal to the base station 40 via a multiple or single carrier wave while using same resources such as time, frequency, or code. For this purpose, the base station 40 has $c$ antennas 30, 32, 34, ..., and 36 (where $c \geq a$) which receive the wireless signal. Here, up-link data communication from the mobile station 10, 12, 14, ... or 16 to the base station 40 according to the present invention will be described below

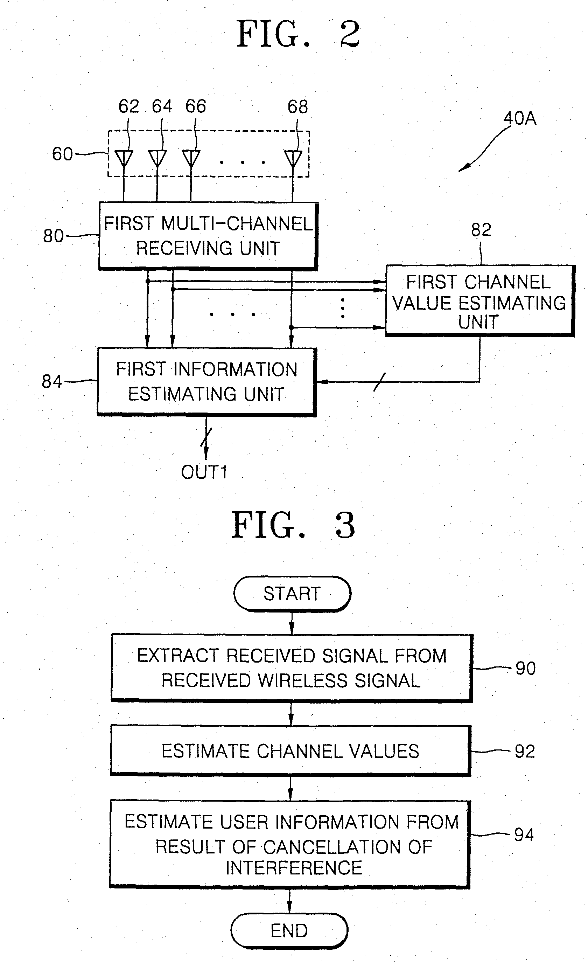

FIG. 2 is a block diagram illustrating a preferred embodiment (40A) of the apparatus 40 for up-link data communication shown in FIG. 1 according to the present invention. Referring to FIG. 2, the apparatus 40A for up-link data communication includes an antenna terminal 60 comprised of c antennas 62, 64, 66, ..., and 68, a first multi-channel receiving unit 80, a first channel value estimating unit 82, and a first information estimating unit 84.

FIG. 3 is a flow chart illustrating an embodiment of a method for up-link data communication according to the present invention implemented with the apparatus 40A for up-link data communication shown in FIG. 2. The method shown in FIG. 3 includes steps 90 and 92 of estimating channel values using a received signal that is extracted from a wireless signal, and step 94 of estimating user information.

In the method for up-link data communication according to an embodiment of the present invention, in step 90, a wireless signal transmitted from the $b$ mobile stations among the mobile stations 10, 12, 14, ..., and 16 is received, and a received signal is extracted from the received wireless signal. For this purpose, the *c* antennas 62, 64, 66, ..., and 68 included in the antenna terminal 60 receive a wireless signal, and the first multi-channel receiving unit 80 extracts a received signal from the wireless signal received via the *c* antennas 62, 64, 66, ..., and 68, and outputs the extracted received signal to the first channel value estimating unit 82 and the first information estimating unit 84, respectively.

After step 90, in step 92, impulse responses are estimated using estimated received signals, and the estimated impulse responses are determined as estimated channel values. For this purpose, the first channel value estimating unit 82 estimates the impulse responses of channels that are formed between the *a* mobile stations 10, 12, 14, ..., and 16 and the antennas 62, 64, 66, ..., and 68, from the received signals and outputs the estimated impulse responses as the estimated channel values to the first information estimating unit 84.

After step 92, in step 94, interference between the mobile stations 10, 12, 14, ..., and 16, that is, interference between symbols, is cancelled using the received signal and the channel values, and user information is estimated using the result of cancellation. Techniques such as zero forcing, minimum mean square error (MMSE), or interference cancellation, may be used to remove this interference. Here, in the zero forcing technique, interference is cancelled by multiplying a reverse of an estimated channel value by a received signal, but noise is increased. The MMSE and interference cancellation technique used to solve this problem are respectively disclosed in the articles "Layered Space Time Architecture for Wireless Communication in a Fading Environment when Using Multi Element Antennas" by G.J. Foschini in Bell Labs Technical Journal, pp. 41-59, Autumn 1996, and an "Power Allocation Strategics for Wireless Systems with Multiple Transmit Antennas" by D. Shiu and J.M. Kahn, in subm of IEEE Transactions on Communications, June 1998.

In order to perform step 94, the first information estimating unit 84 cancels interference between the mobile stations 10, 12, 14, ..., and 16 from a *b* signal received from the first multi-channel receiving unit 80 and the channel values received from the first channel value estimating unit 82, estimates user information from the result of cancellation, and outputs the estimated user information to an output terminal OUT1, i.e., a network.

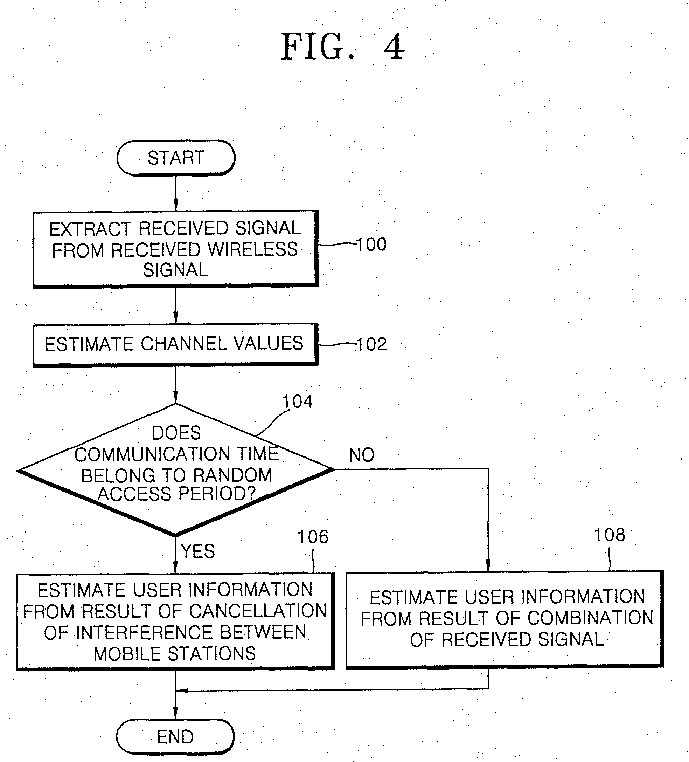

FIG. 4 is a flow chart illustrating another embodiment of the method for up-link data communication according to the present invention. The method shown in FIG. 4 includes steps 100 and 102 of estimating channel values using a received signal that is extracted from a wireless signal, and steps 104 through 108 of estimating user information depending on whether a communication time belongs to a random access period (RAP).

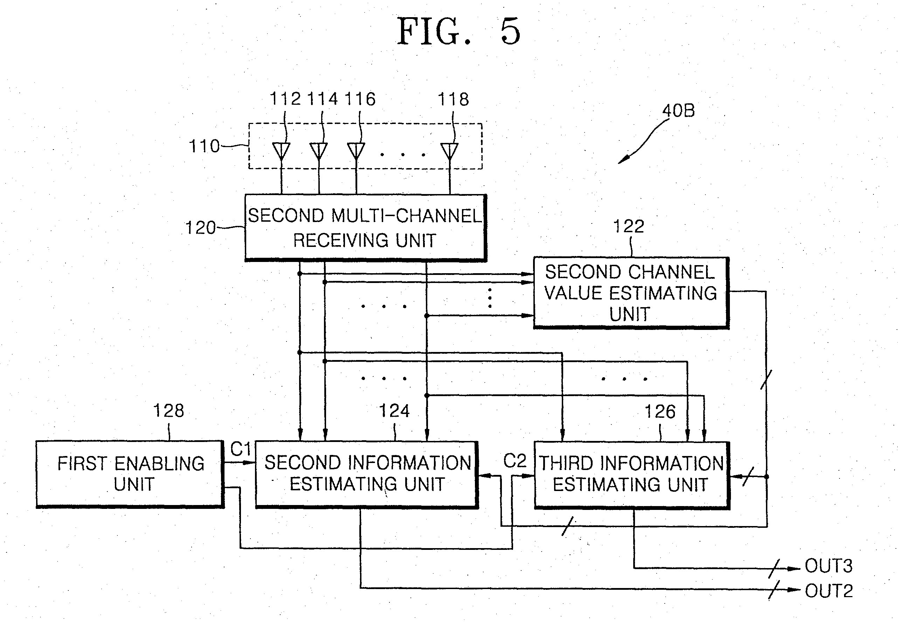

FIG. 5 is a block diagram illustrating another preferred embodiment (40B) of the apparatus 40 for up-link data communication shown in FIG. 1 according to the present invention, which implements the method for up-link data communication shown in FIG. 4. Referring to FIG. 5, the apparatus 40B for up-link data communication includes an antenna terminal 110 comprised of *c* antennas 112, 114, 116, ..., and 118, a second multi-channel receiving unit 120, a second channel value estimating unit 122, second and third information estimating units 124 and 126, and a first enabling unit 128.

In the method for up-link data communication according to another embodiment of the present invention, in step 100, a wireless signal transmitted from a mobile station is received, and a received signal is extracted from the received wireless signal. For this purpose, the *c* antennas 112, 114, 116, ..., and 118 included in the antenna terminal 110 receive a wireless signal, and the second multi-channel receiving unit 120 extracts a *b* received signal from the wireless signal that is received via the *c* antennas 112, 114, 116, ..., and 118.

After step 100, in step 102, impulse responses of channels that are formed between the mobile stations 10, 12, 14, ..., and 16 and the antennas 112, 114, 116, ..., and 118, are estimated using received signals, and the estimated impulse responses are determined as estimated channel values. For this purpose, the second channel value estimating unit 122 estimates the impulse responses of the channels that are formed between the mobile stations 10, 12, 14, ..., and 16 and the antennas 112, 114, 116, ..., and 118 from the signals received from the second multi-channel receiving unit 120, and outputs the estimated impulse responses as the estimated channel values to the second and third information estimating units 124 and 126, respectively.

After step 102, in step 104, it is determined whether a communication time belongs to a random access period. Here, in the state where resources for communication of the base station with the mobile station are not allocated to the base station and the mobile station, the random access period means a period during which a mobile station transmits control information to a base station at an arbitrary time, for allocation of the resources.

For this purpose, the first enabling unit 128 outputs first and second control signals C1 and C2 generated at the interval of a predetermined amount of time to the second and third information estimating units 124 and 126, respectively, and selectively operates the second and third information estimating units 124 and 126 one by one. For example, when the communication time belongs to the random access period, the second information estimating unit 124 is enabled in response to the first control signal C1 generated by the first enabling unit 128, and when the communication time does not belong to the random access period, the third information estimating unit 126 is enabled in response to the second control signal C2 generated by the first enabling unit 128.

If it is determined that the communication time belongs to the random access period, in step 106, interference between the mobile stations 10, 12, 14, ..., and 16 is cancelled using the received signal and the channel values, and user information is estimated using the result of cancellation. For this purpose, if it is recognized that the communication time belongs to the random access period through the first control signal C1 received from the first enabling unit 128, the second information estimating unit 124 cancels interference between the mobile stations 10, 12, 14, ..., and 16 from the signal received from the second multi-channel receiving unit 120 and the channel values received from the second channel value estimating unit 122, estimates user information from the result of cancellation, and outputs the estimated user information to an output terminal OUT2, i.e., a network.

However, if it is determined that the communication time does not belong to the random access period, in step 108, the received signal is combined using the channel values, and user information is estimated using the result of combination. For this purpose, if it is recognized that the communication time does not belong to the random access period through the second control signal C2, the third information estimating unit 126 combines the signal received from the second multi-channel receiving unit 120 using the estimated channel values received from the second channel value estimating unit 122, estimates user information from the result of combination, and outputs the estimated user information to an output terminal OUT3, i.e., a network.

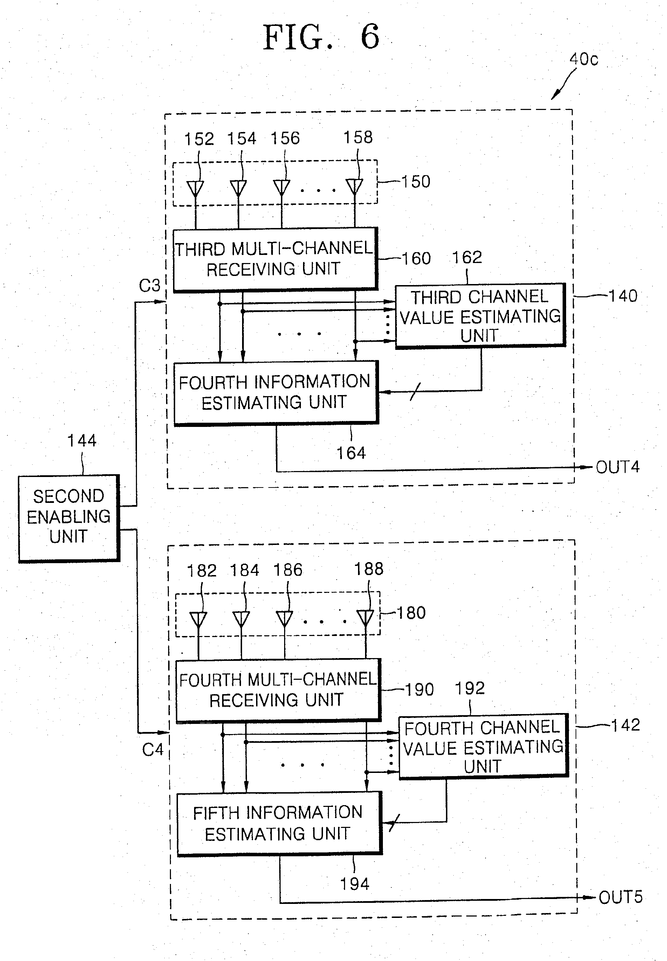

FIG. 6 is a block diagram illustrating another preferred embodiment (40C) of the apparatus 40 for up-link data communication shown in FIG. 1 according to the present invention, which implements the method for up-link data communication shown in FIG. 4. The apparatus 40C for up-link data communication includes first and second up-link data communication units 140 and 142, and a second enabling unit 144.

According to another embodiment of the present invention, in order to perform steps 100, 102, and 106 of FIG. 4, the first up-link data communication unit 140 shown in FIG. 6 is enabled in response to a third control signal C3 received from the second enabling unit 144, estimates channel values from a received signal extracted from a received wireless signal, cancels interference between the mobile stations 10, 12, 14, ..., and 16 from the estimated channel values and received signals, and estimates user information from the result of cancellation. For this purpose, the first up-link data communication unit 140 may be implemented with an antenna terminal 150 having c antennas 152, 154, 156, ..., and 158, a third multi-channel receiving unit 160, a third channel value estimating unit 162, and a fourth information estimating unit 164.

In step 100, the c antennas 152, 154, 156, ..., and 158 included in the antenna terminal 150 receive a wireless signal, and the third multi-channel receiving unit 160 extracts a received signal from the wireless signal received by the c antennas 152, 154, 156, ..., and 158 and outputs the extracted b received signal to the third channel value estimating unit 162 and the fourth information estimating units 164, respectively.

In step 102, the third channel value estimating unit 162 estimates channel values corresponding to impulse responses of channels that are formed between the mobile stations 10, 12, 14, ..., and 16 and the antennas 152, 154, 156, ..., and 158, from b signals received from the third multi-channel receiving unit 160 and outputs the estimated channel values to the fourth information estimating unit 164.

In this case, in step 106, the fourth information estimating unit 164 cancels interference between the mobile stations 10, 12, 14, ..., and 16 from a signal received from the third multi-channel receiving unit 160 and estimated channel values received from the third channel value estimating unit 162, estimates user information from the result of cancellation, and outputs the estimated user information to an output terminal OUT4, i.e., a network. The fourth information estimating unit 164 performs the same operation as that of the second information estimating unit 124 shown in FIG. 5.

In this case, at least one of the third multi-channel receiving unit 160, the third channel value estimating unit 162, and the fourth information estimating unit 164 is enabled in response to the third control signal C3 output from the second enabling unit 144 so that the first up-link data communication unit 140 performs steps 100, 102, and 106 only when it is recognized that the communication time belongs to the random access period.

Meanwhile, in order to perform steps 100, 102, and 108 of FIG. 4, the second up-link data communication unit 142 of FIG. 6 is enabled in response to the fourth control signal C4 received from the second enabling unit 144, estimates channel values from a received signal that is extracted from a received wireless signal, estimates user information from the result of combination of received signals using the estimated channel values, and outputs the estimated user information to an output terminal OUTS, i.e., a network. For this purpose, the second up-link data communication unit 142 may be implemented with an antenna terminal 180 having c antennas 182, 184, 186, ..., and 188, a fourth multi-channel receiving unit 190, a fourth channel value estimating unit 192, and a fifth information estimating unit 194.

In step 100, the c antennas 182, 184, 186, ..., and 188 included in the antenna terminal 180 receive a wireless signal, and the fourth multi-channel receiving unit 190 extracts a b received signal from the wireless signal received by the c antennas 182, 184, 186, ..., and 188 and outputs the extracted received signal to the fourth channel value estimating unit 192 and the fifth information estimating units 194, respectively.

In step 102, the fourth channel value estimating unit 192 estimates channel values corresponding to impulse responses of channels that are formed between the mobile stations 10, 12, 14, ..., and 16 and the antennas 182, 184, 186, ..., and 188, from signals received from the fourth multi-channel receiving unit 190 and outputs the estimated channel values to the fifth information estimating unit 194.

In step 108, the fifth information estimating unit 194 combines signals received from the fourth multi-channel receiving unit 190 using the estimated channel values received from the fourth channel value estimating unit 192, estimates user information from the result of combination, and outputs the estimated user information to an output terminal OUTS, i.e., a network. The fifth information estimating unit 194 performs the same operation as that of the third information estimating unit 126 shown in FIG. 5.

At least one of the fourth multi-channel receiving unit 190, the fourth channel value estimating unit 192, and the fifth information estimating unit 194 is enabled in response to the fourth control signal C4 output from the second enabling unit 144 so that the second up-link data communication unit 142 performs steps 100, 102, and 108 only when it is recognized that the communication time does not belong to the random access period.

In order to perform step 104, the second enabling unit 144 outputs the third and fourth control signals C3 and C4 generated at the interval of a predetermined amount of time, to the first and second up-link data communication units 140 and 142, respectively, and selectively operates the first and second up-link data communication units 140 and 142 one by one.

By comparison of the above-mentioned embodiments of the apparatus and method for up-link data communication according to the present invention with one another, it is revealed that the embodiment shown in FIG. 5 may be implemented at the smallest cost and the embodiment shown in FIG. 2 has the largest throughput, and the random access period is reduced identically in the three embodiments shown in FIGS. 2, 5, and 6.

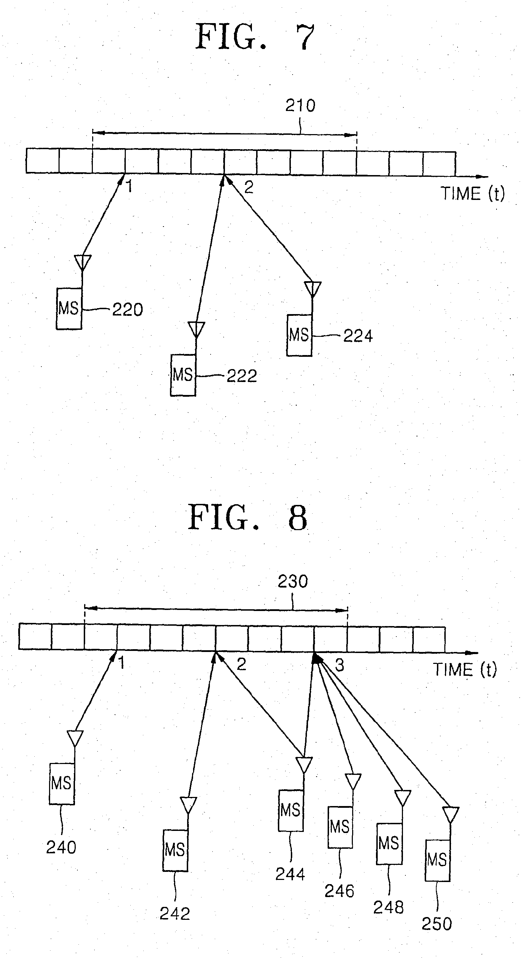

FIG. 7 illustrates the concept of random access in a conventional slotted ALOHA manner. Each rectangle represents a time slot as a communicable time, and boundaries between rectangles represent the instant at which communication can be begun.

Referring to FIG. 7, if a mobile station (MS) 220 random-accesses a base station as shown by the arrow at an instant 1 at which one user, i.e., the MS 220, can begin communication at a random access period 210, the MS 220 can successfully access the base station. However, if two or more mobile stations (MSs) 222 and 224 simultaneously random-access the base station as shown by the arrows at an instant 2 at which the two or more MSs 222 and 224 can begin communication, the MSs 222 and 224 cannot successfully access the base station because of collision.

FIG. 8 illustrates the concept of random access in a slotted ALOHA manner according to the present invention. Each of the rectangles represents a time slot as a communicable time, and boundaries between rectangles represent the instant at which communication can be begun.

Referring to FIG. 8, if one mobile station (MS) 240 random-accesses a base station as shown by the arrow at the instant 1 at which one MS 240 can begin communication at a random access period 230, the MS 240 can successfully access the base station. Also, if two or more mobile stations (MSs) 242 and 244 simultaneously random-access a base station as shown by the arrows at the instant 2 at which the two or more mobile stations (MSs) 242 and 244 can begin communication, when c antennas of the base station is greater than 2, collision does not occur, and thus the MSs 242 and 244 can successfully access the base station. In this case, assuming c antennas of the base station is three, if four mobile stations (MSs) 244, 246, 248, and 250 simultaneously random-access the base station as shown by the arrows at the instant 3 at which the four MSs 244, 246, 248, and 250 can begin communication, collision occurs, and thus the MSs 244, 246, 248, and 250 cannot successfully access the base station. However, if the MSs simultaneously access the base station with the number of antennas of the base station, collision can be prevented, and thus the probability of successful random access is increased. Hence, the amount of resources which should be allocated for random access can be reduced such that a time excluding the random access period is increased and the capacity of a channel used to transmit user information can be increased.

Hereinafter, the method and apparatus for up-link data communication according to the present invention and a conventional method and apparatus for up-link data communication will be compared with each other with reference to the accompanying drawings.

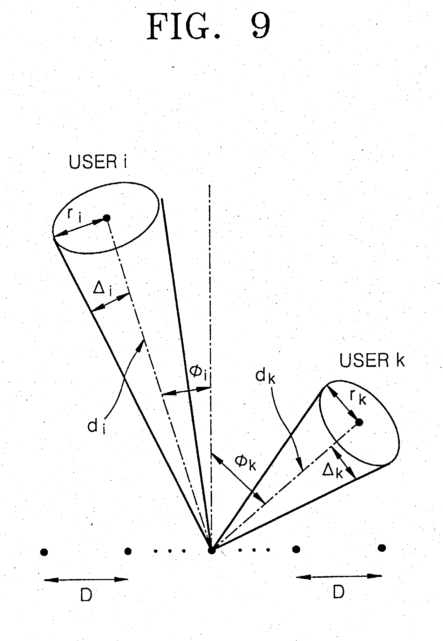

FIG. 9 is a conceptual diagram for modeling a channel **H.** In FIG. 9, D represents an interval between antennas of a base station, $d_i$ represents a distance between an i-th ($1 \leq i \leq a$) mobile station and the base station, $\Delta_i$ represents a maximum angle in which an unequal radio wave deviates from a line connecting the mobile station to the base station, and $\phi_i$ represents an angle formed by a line perpendicular to a line connecting antennas of the base station to one another and the line connecting the mobile station to the base station.

Assuming a radio wave is uniformly distributed within a radius $r_i$ from the mobile station and a channel through which a wireless signal received from the i-th mobile station to a j-th antenna of the base station passes is $h_{ij}$, a channel **H**$_i$ through which the wireless signal is transmitted from the i-th mobile station to the base station is represented as a row vector like in Equation 1.

$$H_i = [h_{i1} \ ... \ h_{ib}^T] \qquad (1)$$

The channel **H** through which a wireless signal is transmitted from a mobile stations 10, 12, 14, ..., and 16 to the base station 40 may be expressed as a matrix like in Equation 2.

$$H = [H_1 \ ... \ H_a]^T \qquad (2)$$

In this case, $h_{ij}$ is modeled like in Equation 3.

$$h_{ij} = \sqrt{\Gamma_i} a_{ij} e^{-j2\pi(k-j)\frac{D}{\lambda}\sin\phi^i} \qquad (3)$$

Here, $a_{ij}$ represents a complex Gaussian process, $\lambda$ represents a carrier frequency, and $\Gamma_i$ represents a path loss and may be modeled like in Equation 4.

$$\Gamma_i = 20\log(\frac{4\pi f}{c}) + \alpha 10\log d_i + X_\sigma(dB) \qquad (4)$$

Here, f represents a carrier frequency, c represents the speed of light, $\alpha$ represents a path loss exponent, and $X_\sigma$ represents a fading value in a wider range having normalized log distribution. Meanings of variables f, c, $\alpha$, and $X_\sigma$ are disclosed in the book "Smart Antennas for Wireless Communications" by Theodore Rappaport, pp. 36-37.

On the above-mentioned conditions, when the interval D between the antennas of the base station increases, a correlation is reduced. In this case, when one user having a transmission power $P_i$ communicates with the base station having $c$ antennas, maximum ratio combining (MRC) is used in the conventional method for up-link data communication which maximizes the throughput of the base station.

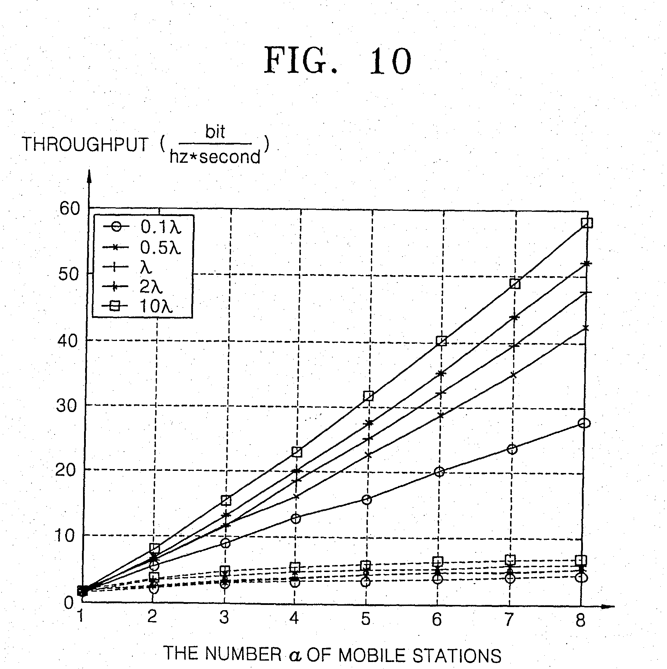

FIG. 10 is a graph for comparing the performance of the present invention with that of prior art. The horizontal axis represents the number a of mobile stations, the vertical axis represents throughput, the full lines represent throughputs obtained by the method and apparatus for up-link data communication according to the present invention, and the dotted lines represent throughputs obtained by the conventional method and apparatus for up-link data communication using MRC.

The antenna interval D is varied to $0.1\lambda$, $0.5\lambda$, $\lambda$, $2\lambda$, and $10\lambda$, the pass loss exponent $\alpha$ is set to 3, normalized log fading $X_\sigma$ is set to 0, frequency f is set to 5 GHz, radius $r_i$ is set to 0.1 time of $d_i$, the position of the mobile station is uniformly distributed in a circle having a predetermined range, and in case of no fading, the predetermined range is set to a distance in which binary phase shift keying (BPSK) having a bit error rate (BER) of $10^{-7}$ can be successfully reached.

In this case, as shown in FIG. 10, according to the present invention, when the antenna interval D increases, the correlation is reduced such that throughput, the capacity of the channel, is increased about to the number of antennas compared to the conventional method.

As described above, in the apparatus and method for up-link data communication according to the present invention, the random access period can be reduced such that a time required for transmitting and receiving another data is relatively increased and the capacity of the channel as the entire throughput, is increased to the number of antennas of a base station even if the number of antennas of each of mobile stations is one.

While this invention has been particularly shown and described with reference to preferred embodiments thereof, it will be understood by those skilled in the art that various changes in form and details may be made therein without departing from the spirit and scope of the invention as defined by the appended claims.

## Claims

1. An apparatus for up-link data communication which obtains user information from a wireless signal transmitted from b mobile stations (where b is a positive integer greater than 1) among a mobile stations (10, 12, 14, 16) (where a is a positive integer greater than 2), each mobile station having one antenna (20, 22, 24, 26), the apparatus comprising:

   c antennas (62, 64, 66, 68; 112, 114, 116, 118; 152, 154, 156, 158; 182, 184, 186, 188) (where c a) which receives the wireless signal;
   a multi-channel receiving unit (80; 120; 160; 190) which extracts received signals from the wireless signal received by the c antennas;
   a channel value estimating unit (82; 122; 162; 192) which estimates impulse responses of channels that are formed between the mobile stations and the antennas, from the received signals and outputs the estimated impulse responses as channel values; and
   an information estimating unit (84; 124; 164) which cancels interference between the mobile stations, from the received signal and the channel values, and estimates the user information from the result of cancellation.

2. A method for up-link data communication performed by the apparatus for up-link data communication of claim 1, the method comprising:

   receiving the wireless signal and extracting the received signal from the received wireless signal;
   estimating the impulse responses using the received signals and determining the estimated impulse responses as the channel values; and canceling the interference using the received signal and the channel values and estimating the user information using the result of cancellation.

3. An apparatus for up-link data communication according to claim 1 wherein the information estimating unit (124) is enabled in response to a first control signal, further comprising:

a further information estimating unit (126; 194) which is enabled in response to a second control signal, combines the received signals using the channel values, and estimates the user information from the result of combination; and an enabling unit (128) which generates the first and second control signals at the interval of a predetermined amount of time.

4. An apparatus for up-link data communication according to claim 1 wherein the c antennas (152, 154, 156, 158), the multi-channel receiving unit (160), the channel value estimating unit (162) and the information estimating unit (164), where the information estimating unit (164) is enabled in response to a first control signal, comprise a first up-link data communication unit (140), the apparatus further comprising:

a second up-link data communication unit (142) comprising c antennas (182, 184, 186, 188), a second multi-channel receiving unit (190), a second channel value estimating unit (192) and a second information estimating unit, where the second information estimating unit (194), which is enabled in response to a second control signal, combines the received signals using the channel values and estimates the user information from the result of combination; and a second enabling unit (144) which generates the first and second control signals at the interval of a predetermined time.

5. An apparatus for up-link data communication which obtains user information from a wireless signal transmitted from b mobile stations (where b is a positive integer greater than 1) among a mobile stations (10, 12, 14, 16) (where a is a positive integer greater than 2), each mobile station having one antenna (20, 22, 24, 26), the apparatus comprising:

a first up-link data communication unit (140) which is enabled in response to a third control signal, estimates channel values from received signals extracted from the received wireless signal, cancels interference between the mobile stations from the estimated channel values and the received signals, and estimates the user information from the result of cancellation; a second up-link data communication unit (142) which is enabled in response to a fourth control signal, estimates channel values from received signals extracted from the received wireless signal, combines the received signals using the estimated channel values, and estimates the user information from the result of combination; and a second enabling unit (144) which generates the third and fourth control signals at the interval of a predetermined amount of time;

wherein each of the first and second up-link data communication units (140; 142) has c antennas (152, 154, 156, 158; 182, 184, 186, 188) (where c a) which receives the wireless signal, and the channel values correspond to impulse responses of channels that are formed between the mobile stations and the antennas.

6. The apparatus of claim 4 or 5, wherein the first up-link data communication unit (140) comprises:

a third multi-channel receiving unit (160) which extracts the received signals from the wireless signal received by the c antennas (152, 154, 156, 158); a third channel value estimating unit (162) which estimates the channel values from the signals received from the third multi-channel receiving unit; and a fourth information estimating unit (164) which cancels the interference from the signals received from the third multi-channel receiving unit and the channel values received from the third channel value estimating unit, and estimates the user information from the result of cancellation;

wherein at least one of the third multi-channel receiving unit (160), the third channel value estimating unit (162), and the fourth information estimating unit (164) is enabled in response to the third control signal.

7. The apparatus of claim 4, 5 or 6, wherein the second up-link data communication unit (142) comprises:

a fourth multi-channel receiving unit (190) which extracts the received signals from the wireless signal received by the c antennas (182, 184, 186, 188); a fourth channel value estimating unit (192) which estimates the channel values from the signals received from the fourth multi-channel receiving unit; and

a fifth information estimating unit (194) which combines the signals received from the fourth multi-channel receiving unit using the channel values received from the fourth channel value estimating unit, and estimates the user information from the result of combination;

wherein at least one of the fourth multi-channel receiving unit (190), the fourth channel value estimating unit (192), and the fifth information estimating unit (194) is enabled in response to the fourth control signal.

8. A method for up-link data communication performed by the apparatus for up-link data communication of any of claims 3 to 7, the method comprising:

receiving the wireless signal and extracting the received signals from the received wireless signal;
estimating the impulse responses using the received signals and determining the estimated impulse responses as the channel values;
determining whether a communication time belongs to a random access period;
canceling the interference using the received signals and the channel values and estimating the user information using the result of cancellation if it is determined that the communication time belongs to the random access period; and
combining the received signals using the channel values and estimating the user information using the result of combination if it is determined that the communication time does not belong to the random access period.

# FIG. 1

# FIG. 2

62 64 66 68

40A

60

FIRST MULTI-CHANNEL
RECEIVING UNIT

80

82

FIRST CHANNEL
VALUE ESTIMATING
UNIT

FIRST INFORMATION
ESTIMATING UNIT

84

OUT1

# FIG. 3

START

EXTRACT RECEIVED SIGNAL FROM
RECEIVED WIRELESS SIGNAL

90

ESTIMATE CHANNEL VALUES

92

ESTIMATE USER INFORMATION FROM
RESULT OF CANCELLATION OF
INTERFERENCE

94

END

# FIG. 4

START

EXTRACT RECEIVED SIGNAL
FROM RECEIVED WIRELESS
SIGNAL ——100

ESTIMATE CHANNEL VALUES ——102

104
DOES
COMMUNICATION TIME
BELONG TO RANDOM
ACCESS PERIOD?

NO

YES 106

ESTIMATE USER INFORMATION
FROM RESULT OF CANCELLATION
OF INTERFERENCE BETWEEN
MOBILE STATIONS

108

ESTIMATE USER INFORMATION
FROM RESULT OF COMBINATION
OF RECEIVED SIGNAL

END

# FIG. 5

EP 1 365 522 A2

# FIG. 6

40c

152 154 156 158

150

THIRD MULTI-CHANNEL
RECEIVING UNIT — 160    162

C3

THIRD CHANNEL
VALUE ESTIMATING
UNIT — 140

FOURTH INFORMATION
ESTIMATING UNIT

164

OUT4

144

SECOND
ENABLING
UNIT

182 184 186 188

180

FOURTH MULTI-CHANNEL
RECEIVING UNIT — 190    192

C4

FOURTH CHANNEL
VALUE ESTIMATING
UNIT — 142

FIFTH INFORMATION
ESTIMATING UNIT

194

OUT5

# FIG. 7

# FIG. 8

# FIG. 9

# FIG. 10

THROUGHPUT $\left(\dfrac{\text{bit}}{\text{hz}*\text{second}}\right)$

THE NUMBER $a$ OF MOBILE STATIONS